(19) Europäisches Patentamt
European Patent Office
Office européen des brevets

(11) **EP 3 311 969 A1**

(12) **EUROPEAN PATENT APPLICATION**
published in accordance with Art. 153(4) EPC

(43) Date of publication:
**25.04.2018 Bulletin 2018/17**

(51) Int Cl.:
*B29B 17/00* (2006.01)      *C10G 1/02* (2006.01)
*C10B 53/07* (2006.01)

(21) Application number: **15896490.8**

(22) Date of filing: **01.10.2015**

(86) International application number:
**PCT/UA2015/000090**

(87) International publication number:
**WO 2016/209193 (29.12.2016 Gazette 2016/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **22.06.2015 UA 201506122**

(71) Applicants:
• **Bondarenko, Oleksandr Mykolaiovych**
**Kyiv 04060 (UA)**
• **Molchanov, Vladimir Ivanovych**
**Saky, Republic of Crimea 96500 (UA)**

(72) Inventors:
• **Bondarenko, Oleksandr Mykolaiovych**
**Kyiv 04060 (UA)**
• **Molchanov, Vladimir Ivanovych**
**Saky, Republic of Crimea 96500 (UA)**

(74) Representative: **Zaboliene, Reda**
**METIDA Law Firm Zaboliene and Partners**
**Business center VERTAS**
**Gyneju 16**
**01109 Vilnius (LT)**

(54) **DEVICE FOR THERMALLY DECOMPOSING POLYETHYLENE AND POLYPROPYLENE WASTE**

(57)    Device for thermal destruction of polyethylene and polypropylene waste includes a polymer raw material heating unit, a pyrolysis furnace and a reactor of polymeric raw material thermal destruction, with devices of raw material loading and coke unloading, a unit for fractionating the destruction products of polymer raw material, a unit of heat exchangers, equipment for performing thermal catalysis over a catalyst, as well as the supply unit with pipelines for the cooling agent in the form of water circulating. When operated in a periodic plastic waste processing mode, the device contains no less than two thermal destruction reactors. These reactors are connected in parallel with the provision of a full technological cycle "heating - thermal destruction - cooling - coke unloading - raw material loading". Each of the reactors, or one of them, is equipped with a portable or removable furnace. The furnace is made with the possibility of detachment from the reactor or joining to the reactor. The unit for fractionating the polymer raw material destruction products consists of a series-connected heat exchanger with water cooling, hydrocarbons collecting tank with a boiler, a dewaxer, a rectification column for separating diesel fuel and gasoline fractions, and a boiler, installed in the column cube, a tubular vertically installed heat exchanger with a downward movement of gasoline vapor and hydrocarbon gas. The circuit of countercurrent motion of the phases with a descending flow of a vapor-gas mixture of hydrocarbons is implemented in the heat exchanger with water cooling. Dewaxer consists of a packed bottom and a dephlegmator. Rectification column for separating diesel fuel and gasoline fractions consists of a packed bottom and a dephlegmator. Dephlegmator is installed at the top and configured as a shell-and-tube heat exchanger. As a catalyst, the device contains a heterogeneous catalyst in the form of titanium strands twisted in spirals. Each spiral is preturned in one or in different directions. Titanium strands are placed in the collecting tank, in the tubes of the heat exchanger, where high-boiling components of a vapor-gas mixture are condensed, in the tubes of the dewaxer dephlegmator and in the tubes of the rectification column dephlegmator.

EP 3 311 969 A1

Fig. 1

**Description**

**THE FIELD OF THE INVENTION**

The device refers to the plastic industry and domestic waste utilization, particularly polyethylene (hereinafter referred to as PE) and polypropylene (hereinafter referred to as PP) waste, namely to the technical means of thermal and thermocatalytic destruction of the specified wastes by periodic or continuous mode, their disposal, and recycling of motor fuels (gasoline, diesel fuel), heating oil, hydrocarbon gas and carbon residue (coke).

**PRIOR ART**

One of the most important problems currently facing the world community is the problem of environmental pollution with polymer materials waste, in particular PE and PP plastics.

Until recently, storage of such wastes at municipal solid waste (MSW) landfills or simple burning were the main methods of their disposal. In other words, traditional waste treatment includes calcining or dumping without initial sorting and separate processing depending on the types of disposed waste. Obviously, such disposal of waste pollutes the environment.

Among the types of waste, it is plastic waste which becomes the main means of pollution due to their natural diversity and gradual accumulation. Traditional disposal of plastic waste includes calcining, or otherwise sorting for recovery. At the same time, calcination process (method) consists in direct burning of plastic waste, while sorting process (method) for subsequent recovery includes sorting of plastic waste and recovery of disposed plastic.

The first method (calcination) refers exclusively to engineering consumption, which requires expensive equipment to prevent the formation of secondary sources of environmental threats, such as air pollution. At the same time, the recovery method has the problem of processing complexity because of the wide variety of types of recyclable plastic and additives that it contains. Also, the reduced physical and mechanical properties of disposed and recovered products often make the recovery process impractical.

However, the above-mentioned methods do not solve the problem of environmental pollution, since in the case of waste disposal at landfills (at the disposal site), for most polymer materials, there are simply no microorganisms capable of converting (reprocessing) them into environmental friendly substances. At burning, a significant amount of gaseous and solid waste is formed, which, in its turn, should also be disposed of.

A number of secondary use methods of PE and PP are known. In most of these methods, various techniques and devices for secondary forming of products from plastics waste are used. The main disadvantage of these methods is that mechanical properties of products from secondary plastics are deteriorated by 15-20 % compared to the original products [A. S. Klinkov, P. S. Belyaiev, M. V. Sokolov Utilization and recycling of polymer materials: teaching guide. - Tambov: Publishing house of Tambov State Technical University, 2005.-80 p.].

Among the known technologies, it is worthwhile to highlight pyrolysis, which is a method of controlled thermal decomposition of source raw material in the absence of oxygen. As a result of pyrolysis processing of raw material, we obtain the conforming products: boiler (heating) fuel (is used for its intended purpose and for obtaining components of diesel (gasoline) fraction in the presence of a rectification column); pyrolysis gas (is used as a fuel for the device operation); dry carbon residue of the 4th hazard class (is used for local, construction and reclamation needs, and is also fed to the concrete mixes as a filler); heat released during the processing (is used for the premises heating).

Pyrolysis is a combination of elementary reactions of organic substances decomposition (breaking down) into products with a lower molecular mass. The reactions proceed both sequentially and in parallel, and are inextricably interconnected.

Nowadays there is a number of pyrolysis classifications, namely:

*dry pyrolysis* (in the absence of oxygen) and *oxidative pyrolysis* (with a partial burning of waste or as a result of direct processing of waste by combustion gases);
*low-temperature pyrolysis* (300-550 °C), aimed mainly at obtaining liquid fraction products;
*medium-temperature pyrolysis* (550-800 °C), aimed at obtaining products of all fractions;
*high-temperature pyrolysis* (over 900 °C), aimed at obtaining gaseous process products;
*pyrolysis* implemented in the devices of cyclic (*periodic*) and *continuous action.*

However, in the CIS countries, including Russia and Ukraine, the process of waste recycling by means of pyrolysis method is not widespread yet. The reason for this is, firstly, the difficulty in operating the technologies and equipment presented on the market of the CIS countries, and secondly, the lack of experience of the local producers that do not guarantee the operation of the devices, and thirdly, the lack of efficient pyrolysis technologies and devices, implementing these technologies. The result is a high cost of foreign analogs.

A method for disposing PE waste is known [Method for secondary polyethylene recycling, patent for invention RU 2106365, IPC C08J11/04, application No. 93011365/04 dated March 25, 1993, published on March 10, 1998] according to which the pre-ground PE is fractionated in a boiling solvent into a soluble sol fraction and an insoluble gel fraction with separation and washing of the fractionation products, and then low-temperature pyrolysis in vacuum is carried out separately for each fraction.

The main disadvantage of this method is the use of toxic solvents in disposal technology, as well as multiple stages of the disposal process.

Methods for recycling of polymeric materials waste products into valuable organic substances are known. One of such methods is the thermal and thermocatalytic destruction of polymers waste into carbon fractions, which, after appropriate treatment, can be used as a high-quality motor fuel [Thermal destruction of waste pyrolysis http://i-pec.ru/].

A number of methods for thermoplastics waste processing are known. They are implemented with the help of appropriate devices, which are thus a part of these methods. For example, a method for thermoplastics waste processing and the device for its implementation are known. According to this method, pyrolysis is carried out in the reactor at a temperature of 480-600 oC and a pressure of 0.1-0.15 MPa, and the liquid phase is separated from the vapor-gas mixture by two-steps air condensation. Upon that, in the first stage the gas-vapor mixture is cooled at temperatures from 280-320 °C at the beginning of condensation and up to 110-120 °C at the end of condensation, with a subsequent separation of high-boiling components of liquid fuel and paraffins, and in the second stage the vapor-gas mixture is cooled up to the temperature of 50-60 °C with a subsequent separation of low-boiling components of liquid fuel. The device is equipped with a feeder for the continuous supply of raw material [Patent 2459843 RF, IPC7 C08J11/04, B29B17/00, F23G5/027. Method for thermoplastics waste processing and the device for its implementation/Yu. N. Shapovalov, A. N. Ulyanov, V. A. Andreyev, P. Yu. Salikov and others; application No. 20100151482/02; submitted on December 15, 2010; published on August 27, 2012, bulletin No. 24].

The disadvantage of this device is the absence of fractionating equipment, which allows obtaining precise fractions of liquid hydrocarbons, such as gasoline, diesel fuel, and heating oil.

Device for thermal destruction of PP and PE waste is known. It consists of a thermal destruction reactor, a heating unit, a heat exchangers unit and a rectification column, on the basis of which the similar method is implemented [Method of thermal destruction of polyethylene and polypropylene waste, utility model patent UA 77844, IPC (2013.01) C10G1/00, C10B53/00, F22G5/027, application No. u201210850 dated September 17, 2012, published on February 25, 2013, bulletin No. 4].

The disadvantage of the known device is its operation in the periodic mode, as a result of which heat is consumed for heating the equipment after stopping for coke unloading and raw material loading into the reactor, and the proportion of unqualified products generated during the device starts and stops increases. Besides, with such a typical (commonly accepted) design of the rectification column, when all products are produced in one column in one pass and the column is refluxed with a cooled overhead (in this case, with gasoline), fractionating of hydrocarbons from a vapor-gas mixture containing up to 20% of inert hydrocarbon gases is extremely difficult.

A method and apparatus for waste processing are known. They include waste sorting, isolating light plastic waste and their cracking, gradual cooling of cracking products, separating gaseous hydrocarbons and subsequent fractional distillation of liquid hydrocarbons. The apparatus of this invention includes: a garbage trolley transporting waste and unloaded onto the conveyor belt for waste transporting to the chopper equipped with a mill on which the waste is ground. The above-mentioned mill can generate high wind energy, which can reduce moisture and land content in waste by spraying waste depending on its relative weight. The device also includes four cracking furnaces, incinerator, cooling water piping, black oil fuel supply line, oil gas line, gas burner and other typical elements [Processes and apparatus for energy recovery through waste sorting and calcining, US 005998682A dated December 07, 1999, IPC (1999) C01G1/00, C07C1/00, application No. 09/182647 dated October 30, 1998].

The disadvantage of this method is the device operation periodic scheme used, according to which the cracking furnaces switch on in sequence, going through "plastic waste loading - plastics cracking - cracking furnace cooling - coke discharge" stages, as a result of which an increased fuel consumption occurs for the next reheating of the cooled cracking furnace at the beginning of the next cycle of the device operation. Besides, due to the long idle time of the cracking furnaces at the cooling stage (longer than the actual cracking process time), it is necessary to implement a scheme with an increased number of cracking furnaces (four) to create a continuous operation cycling of the device, that will increase the device cost. The disadvantage is that hydrocarbons are cooled after cracking, the hydrocarbon gas is separated, then it is reheated to 450 °C and fractionation of the hydrocarbon mixture is carried out. This leads to double consumption of fuel (for heating) and water (for cooling the products). The disadvantage of the invention is also that cracking is carried out at an increased pressure of 0.4 MPa, that makes the cost of installation, in which the process is carried out, much higher.

Device for plastic waste pyrolysis is known. It contains a heating furnace, a metal retort, a gas burner, a device for continuous raw material loading and coke residue unloading, and a condenser for liquid hydrocarbons is known [Device for plastic waste pyrolysis, utility model patent UA 22609, IPC (2007) C10G9/28, F23G7/00, application No.

u200612719 dated December 04, 2006, published on April 25, 2007, bulletin No. 5].

The disadvantage of this device is that liquid hydrocarbons are not fractionated to obtain marketable products, that reduces the economic effect of operating this plant.

Device for continuous thermal disposal of organic waste is known. It contains a pyrolysis reactor with a heating system, a loading and unloading device, and a condensation unit with water cooling. [Device for continuous thermal disposal of organic waste with a liquid fuel obtaining, utility model patent UA 50431, IPC (2007) C10G1/00, F23G5/027, application No. u200912544 dated December 03, 2009, published on June 10, 2010, bulletin No. 11].

The disadvantage of this device is that all the condensed heavy fractions are returned back to the reactor, where they are reheated, re-condensed, and subjected to destruction again. This leads to significant fuel costs for heating and increases the refrigerant (water) consumption for cooling. In addition, the device does not allow the separation of diesel and gasoline fractions, as follows from the list of products obtained: the plant allows obtaining only liquid fuel, an analog of diesel fuel (and in fact it is a mixture of diesel and gasoline fractions).

The closest to the claimed invention in technical essence is a method of organic raw material thermal destruction, which includes loading the initial raw material into the pyrolysis furnace, thermal decomposition of the initial raw material without access of air with a vapor-gas mixture obtaining, rectification of the vapor-gas mixture with gas mixture and liquid fuel evolution. Besides the vapor-gas mixture discharging from the pyrolysis furnace is subject to catalytic reforming. Highly porous oxymolybdenum and oxycobalt granules filling 9/10 of the catalyst column chamber volume are used as a catalyst. Reforming the vapor-gas mixture over the catalyst is conducted at a temperature of 420-510 °C and a pressure of 0.03 MPa at a volume velocity ranging from 1 to 6.

The gas-vapor mixture coming from the pyrolysis furnace to the catalyst column is enriched with fresh hydrogen at a pressure of 0.05 MPa at a rate of 6 weight percent per hour per 1 ton of raw material, loaded into the pyrolysis furnace.

The above-mentioned method for thermal destruction of organic raw material is implemented at the device, containing a furnace and a pyrolysis chamber with a hatch for raw material loading and solid residue unloading, a gas burner, a coil pipe for reheating the pyrolysis products, a condenser for pyrolysis products cooling, a catalyst column, a rectification column with condensers and an additional equipment [Method for thermal destruction of organic raw material, utility model patent UA 45455, IPC (2009) C10G1/00, application No. u20090583 dated June 09, 2009, published on November 10, 2009, bulletin No. 11].

Low efficiency and cost-effectiveness of carrying out the process of thermal destruction of organic raw material are the disadvantages of this method. This is due to the fact that, according to the technological mode used, double heating and two-fold cooling of the destruction products are carried out during a single operation cycle of the device (from raw material loading to solid residue unloading), that lead to significant fuel costs for heating and cooling agent (water) costs for cooling. Besides, during the periodic operation of the device it is very difficult to achieve synchronous operation of the rectification column with the pyrolysis furnace, that affects the quality of the finished products - gasoline and diesel fuel. The use of expensive substances (oxymolybdenum and oxycobalt granules) as catalysts, as well as an increased consumption of hydrogen for the process (6% by weight of the loaded raw material), leads to an increase in the cost of the process.

Both in the periodic and continuous modes of thermal and thermocatalytic destruction of plastics wastes the invention is based on the task of improving the design of the thermal and thermocatalytic destruction of plastics waste by developing efficient designs of units (apparatuses) of the hydrocarbon fractionation stage that will allow obtaining high-quality products, namely, gasoline and diesel fuel, from the gas-vapor mixture containing up to 20% of inert hydrocarbon gases. Besides, during the periodic operation mode of the device, maintenance of the regulatory temperature in all units (devices) of the fractionating stage will be ensured, which will promote the energy efficiency of the process of organic raw materials disposal.

## DISCLOSURE OF THE INVENTION

The specified technical task is achieved by the fact that in the device for thermal destruction of polyethylene and polypropylene waste in both periodic and continuous modes of the above-mentioned plastics waste processing, which includes a polymer raw material heating unit, a pyrolysis furnace and a reactor of polymeric raw material thermal destruction, with devices of raw material loading and coke unloading, a unit for fractionating the destruction products of polymer raw material, a unit of heat exchangers, equipment for performing thermal catalysis over a catalyst, as well as the supply unit with pipelines for the cooling agent in the form of water circulating. *The new is that* when operated in a periodic plastic waste processing mode, the device contains no less than two thermal destruction reactors connected in parallel with the provision of a full technological cycle "heating - thermal destruction - cooling - coke unloading - raw material loading ". Upon that each of the reactors, or one of them, is equipped with a portable or removable furnace, which is made with the possibility of detachment from the reactor in which the thermal destruction process is finished and joining to the reactor in which the thermal destruction process begins, and the unit for fractionating the polymer raw material destruction products, namely the vapor-gas mixture, consists of a series-connected heat exchanger with water cooling in which the circuit of countercurrent motion of the phases with a descending flow of a vapor-gas mixture of hydrocarbons, a hydrocarbons collecting tank with a boiler, a dewaxer consisting of a packed bottom and a dephlegmator installed at the top and configured as a shell-and-tube heat exchanger, a rectification column for separating diesel fuel and gasoline fractions, consisting of a packed bottom and a dephlegmator installed at the top and configured as a shell-and-tube heat exchanger, and a boiler , installed in the column cube, a tubular vertically installed heat exchanger with a downward movement of gasoline vapor and hydrocarbon gas. Upon that the heterogeneous catalyst is used as a catalyst in the form of titanium strands twisted in spiral, besides each spiral is preturned in one or in different directions, forming in the second the case left and right rotation spirals. Titanium strands are placed in the collecting tank, in the tubes of a heat exchanger where high-boiling hydrocarbons of a vapor-gas mixture are condensed, in the tubes of the dewaxer dephlegmator and in the tubes of the rectification column dephlegmator.

The volume of the collecting tank is selected according to the condition under which the heating fuel dwelling time in the form of hydrocarbons mixture in it was sufficient to ensure complete stripping of the light fractions.

When operating in a periodic mode, the volume of the hydrocarbons collecting tank is determined from the correspondence:

$$V_p = 2 \cdot Q_p,$$

where $Q_p$ is the heating fuel capacity of the device in a single operation cycle, m³/cycle; Vpis the volume of the hydrocarbons collecting tank, m³.

When operating in a continuous mode, the volume of the hydrocarbons collecting tank is determined from the correspondence:

$$V_n = 2 \cdot Q_n,$$

where $Q_n$ is the heating fuel capacity of the device per one hour, m³/hour; $V_n$ is the volume of the hydrocarbons collecting tank, m³.

As a catalyst, the device contains a heterogeneous catalyst made in the form of titanium strands with a width of 5 - 20 mm, a thickness of 0.5 - 1.5 mm, which in the twisted form have a diameter of 10 - 30 mm, a length of 0.1 - 1 m, with a spiral pitch of 10 - 40 mm.

Titanium spirals are preliminary treated during 0.5 - 1 hour by contacting with 1 - 2% hydrofluoric acid at a temperature of 30 - 40 oC.

Titanium strands twisted in spiral are used as a mass-exchanging caps in the dewaxer and in the rectification column.

The dewaxer is made in the form of column apparatus, the bottom of which is filled with both regular and irregular mass-exchanging cap, made in the form of titanium spirals and having a free opening of 90 - 93%.

Irregular mass-exchanging cap is performed in the form of titanium spirals loaded in bulk, with a spiral length of 0.1 - 0.2 m.

Regular mass-exchanging cap is performed in the form of titanium spirals collected in cassettes, with titanium spirals length of up to 1 m.

A shell-and-tube heat exchanger is installed at the top of the dewaxer, which serves as a dephlegmator, and titanium spirals of different rotation direction are arranged in the dewaxer tubes.

The listed characteristics form the essence of the technical solution.

The presence of cause and effect relationship between the set of technical solution essential features and the achieved technical result is as follows.

The supply of fuel gases with a temperature of 600 - 900 °C to the boiler of the hydrocarbons collecting tank (heating fuel fraction) and the rectification column cube allows preliminary heating of the collecting tank and rectification column cube to operating temperatures and faster (by 20 - 30% on average) achieving the scheduled mode by the device.

This significantly reduces (by 50 - 60% on average) the number of unqualified fractional products generated during the start-up period, reduces (by 50 - 60% on average) the cost of heat and energy for their repeated distillation to obtain the qualified products, and also allows maintaining the regulatory temperatures at which the selection of products is carried out, that ultimately improves their final quality.

Maintaining the temperature in the collecting tank at 300 - 360 °C allows obtaining heating fuel with a flash-point of 60 - 90 °C, that proves the absence of light fractions in the collecting tank. Condensation of paraffin vapors in the dewaxer at a temperature of 180 - 300 °C allows obtaining diesel fuel with pre-determined properties.

So, we obtain summer grade of diesel fuel at 300 °C, i.e. with a freezing point of 0 °C, and we obtain winter grade of diesel fuel at 180 °C, with a freezing point of minus 35 °C. Besides that, by this temperature interval (180 - 300 °C) it is possible to regulate the amount of diesel fuel to be taken, removing or adding paraffins from/to it.

Maintaining the temperature of 160 - 220 °C in the rectification column cube allows regulating the contents of light fractions, achieving a regulatory value of the diesel fuel flash point of 40 - 62 °C.

Maintaining the temperature of 35 - 100 °C at the top of the rectification column allows obtaining gasoline with a specified fractional composition and a final boiling point not exceeding 215 °C, that is in accordance with accepted standards. Maintaining the gasoline temperature within 20 - 35 °C after condensation in the heat exchanger allows reducing the loss of vapors of gasoline and hydrocarbon gas, coming out of the heat exchanger together with gasoline, by 2 - 3%.

Table 1 shows data on the quality of gasoline produced by this method, implemented on this device.

**Table 1.** Data on the quality of gasoline

| N o. | parameter name | testing method | standard | result |
|---|---|---|---|---|
| 1 | Octane number | GOST 0226 | - | 86.8 |
| 2 | Final boiling point, not exceeding, °C | GOST 2177 | 215.0 | 179.0 |
| 3 | Residual in the test flask, %, not exceeding | GOST 2177 | 2.0 | 1.0 |
| 4 | Sulphur concentration, %, not exceeding | GOST 19121 | 0.05 | 0.045 |
| 5 | Benzene volume ratio, %, not exceeding | GOST 29040 | 5.0 | 2.76 |
| 6 | Copper-plate test | GOST 6321 | class 1 | hold |
| 7 | Saturated vapor pressure | GOST 1756 | 45.0-70.0 | 42.6 |
| 8 | Lead concentration, g/dm$^3$, not exceeding | GOST R51942 | N/A | N/A |
| 9 | Density at 15 °C, kg/dm$^3$ | GOST R51069 | 725.0 - 780.0 | 726.4 |

As it can be seen from the data given in Table 1, the properties of gasoline produced by this method, implemented on this device, meet the standards.

Table 2 shows data on the quality of diesel fuel produced by this method, implemented on this device.

**Table 2.** Data on the quality of diesel fuel.

| No. | Parameter name | Parameter name | Standard | Result |
|---|---|---|---|---|
| 1 | Fractional composition: | | | |
| | 50% is distilled at a temperature | GOST 2177 | not exceeding 280 | 238 |
| | 95% is distilled at a temperature | GOST 2177 | not exceeding 360 | 330 |
| 2 | Mass fraction of sulphur, % | GOST 19121 | not exceeding 0.05 | 0.024 |
| 3 | Density at 20s, kg/m$^3$ | GOST 3900 | not exceeding 860 | 785.6 |
| 4 | Closed-cup flash point, °C | GOST 6356 | at least 40 | 48 |
| 5 | Existent gum, mg/100cm$^3$ | GOST 1567 | not exceeding 40 | 20.0 |
| 6 | Ash content, % | GOST 1461 | not exceeding 0.01 | N/A |
| 7 | Freezing point, °C | GOST 20287 | not exceeding -10 | -34 |
| 8 | Cloud point, °C | GOST 5066 | not exceeding -5 | -23 |
| 9 | Copper-plate test | GOST 6321 | hold | hold |
| 10 | Cold filter plugging point, °C | GOST 22254 | not exceeding -5 | -22 |

As it can be seen from the data given in Table 2, the properties of diesel fuel produced by this method, implemented on this device, meet the standards.

Operation of the device in a periodic (sequential) mode with at least two thermal destruction reactors, which start working in series, allows ensuring the continuous operation of the fractionation unit. This makes it possible to stabilize the temperature of the gas flues, pipelines, and equipment of the fractionation unit during the entire fractionation period.

In comparison with known technical solutions in which the fractionation unit operates intermittently (periodically), this results in heat and energy savings, which are expended during the repeated starts and stops of the device. The quality of the finished goods at the outlet is also improved.

At the same time, fuel economy is obtained for the furnace reheating, as if it cools down together with the reactor. Due to this, the furnace lining is not exposed to large temperature drops, that usually occurs during cooling, and the service life of the lining increases as well.

After the furnace disconnecting from the reactor, the latter is put into a cooling mode and can be cooled by air supplied from the burner gas-blower. Due to the fact that the thermal destruction reactor is cooled without a furnace having a large mass of lining, the time of the process of cooling to 50 °C, at which it is possible to open the hatch and unload the coke, decreases by 2 - 2.5 times.

As it is shown by the results obtained in experimental studies, the vapor-gas mixture cooling to 300 - 360 °C in vertically installed tubular heat exchanger, in which the vapor-gas mixture with condensed heavy hydrocarbons moves downward through the tubes in which titanium spirals are located with both one and different rotation directions, is the most effective version of the instrumentation of this process (condensation of heavy hydrocarbons) against high concentration of hydrocarbon gas in the mixture and low partial pressure of hydrocarbons.

Screw surface of the spiral not only increases the contact area of the phases, but also increases the intensity of mixing the vapor-gas mixture due to a change in the rotation direction, as it goes along the tubes, in which the spirals are installed, due to the fact that the spirals have a screw surface of different rotation directions (left and right) on one vertical branch. This, in turn, increases the heat and mass exchange efficiency by 2 - 2.5 times, and the specific surface of the phases contact is increased by 1.5 - 2 times.

The hydrocarbons collecting tank is made in the form of a cylindrical container, located horizontally. Experiments proved that the volume of the hydrocarbons collecting tank capacity should be chosen according to the condition under which the heating fuel dwelling time (hydrocarbons mixture) in it was sufficient for stripping of the light fractions. Upon that, for operation in a periodic mode, the volume of the hydrocarbons collecting tank is determined according to the formula:

$$V_p = 2 \cdot Q_p,$$

where $Q_p$ is the heating fuel capacity of the device in a single operation cycle, m$^3$/cycle; Vpis the volume of the hydrocarbons collecting tank, m$^3$.

For operation in a continuous mode, the volume of the hydrocarbons collecting tank is determined according to the formula:

$$V_n = 2 \cdot Q_n,$$

where $Q_n$ is the heating fuel capacity of the device per one hour, m$^3$/hour; $V_n$ is the volume of the hydrocarbons collecting tank, m$^3$.

The hydrocarbons collecting tank is equipped with a boiler, which is heated by fuel gas. This allows obtaining the product in the form of heating fuel, which meets the standards.

The dewaxer is designed as a column apparatus, the lower part of which is filled with a mass-exchanging cap, performed in the form of titanium spirals loaded in bulk (irregular cap) with a spiral length of 0.1 - 0.2 m, or in the form of spirals collected in cassettes (regular cap) with a spiral length of up to 1 m, having a free opening of 90 - 93%.

At the top of the dewaxer, a shell-and-tube heat exchanger is installed, which acts as a dephlegmator. Hydrocarbon vapors rise up the dewaxer tubes, which contain titanium spirals of both one and different rotation direction, through which the paraffins are condensed and drain down, creating a reflux stream, which, in its turn, irrigates the mass-exchanging cap. Simultaneously, the shell-and-tube heat exchanger serves as a column irrigation. Cooling water is supplied to the annular space of the shell-and-tube heat exchanger.

As experiments have shown, such a dewaxer design, in which reflux (cap irrigation) is formed inside the column, rather than being supplied from the outside, is the most preferable. In this case, the gas-vapor mixture contains a large amount of inert hydrocarbon gas (up to 15 - 20%), which lowers the partial pressure of hydrocarbon vapors and worsens condensation conditions.

The rectification column is also equipped with a dephlegmator and a mass-exchanging cap, and a boiler, heated by fuel gases, is installed in the bottom of the column cube to steam the light fraction of the vapor-gas mixture.

Heterogeneous catalysis (contact catalysis) characterizes the change in the rate of chemical reaction under the action of catalysts forming an independent phase and separated from the reacting substances by the boundary line. The most common case is when a solid catalyst (contact) accelerates the reaction between reactant gases or a reaction in solution. The catalytic reaction usually proceeds on the surface of solid catalyst and is due to the activation of the reactants molecules upon interaction with the surface. Therefore, heterogeneous catalysis requires the adsorption of the reaction mixture components from the volume phase on the catalyst surface.

As the performed experiments have shown, the performance of a mass-exchanging cap in the dewaxer and the rectification column on the basis of a heterogeneous catalyst made in the form of titanium spirals which simultaneously serve as a catalyst for the thermal destruction process, as well as titanium spirals loading into the furnace fuel collecting tank allows increasing the yield of light fractions by 3 - 5%. The free opening of the cap in the columns is 90 - 93%, that insignificantly affects the growth of the hydraulic resistance in the system. The pressure at which the process of thermal destruction is carried out is only 0.01 - 0.07 MPa, that increases the process safety.

## BRIEF DESCRIPTION OF THE DRAWINGS

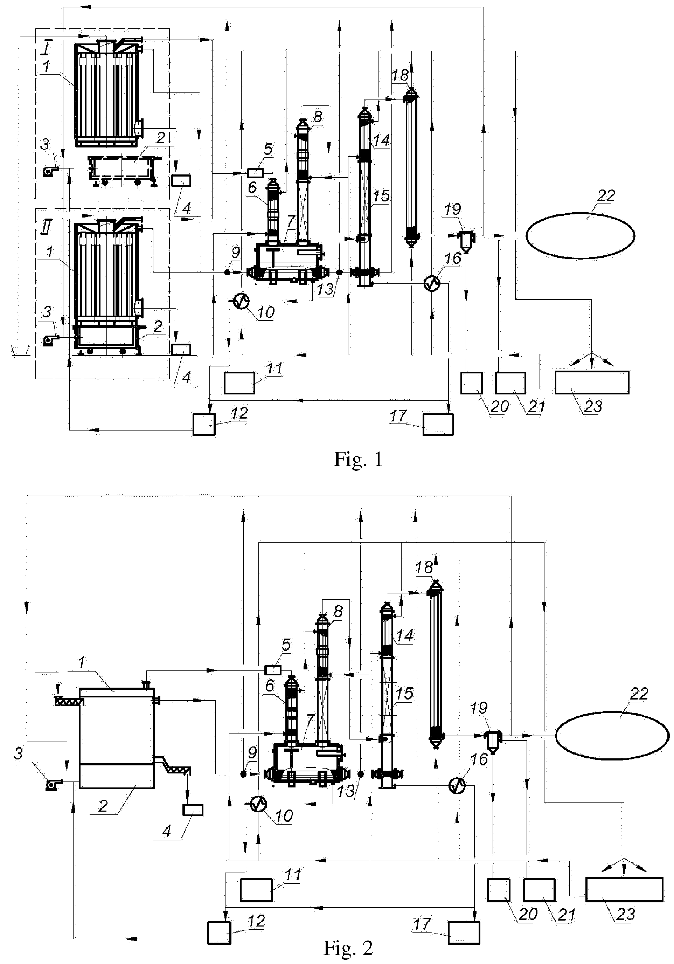

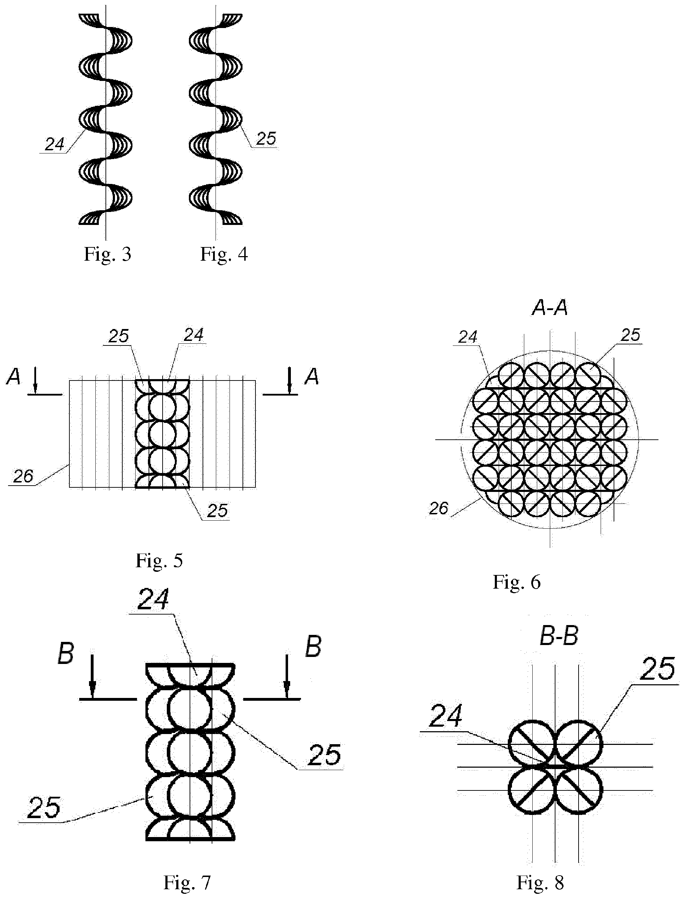

The technical solution is explained in Fig. 1 - Fig. 8, where: Fig. 1 shows a periodic scheme (periodic mode) of the device, on the basis of which the thermal destruction method is implemented; Fig. 2 shows a continuous scheme (continuous mode) of the device, on the basis of which the thermal destruction method is implemented; Fig. 3 shows spiral strands of the left rotation direction; Fig. 4 shows spiral strands of the right rotation direction; Fig. 5 shows a cassette with spiral strands which is placed in the heat exchangers tubes; Fig. 6 shows a section view of A-A of Fig. 5; Fig. 7 shows a bundle of spiral strands which is placed in the heat exchangers tubes; Fig. 8 shows a section view of B-B of Fig. 7.

On fig. 1 - fig. 8 the following notations are agreed:

I is a reactor operation unit in the cooling mode; II is a reactor operation unit in the heating mode; (dotted lines indicate frontiers of I and II units); 1 is a thermal destruction reactor; 2 is a furnace; 3 is a burner; 4 is a coke collector; 5 is a catalyst column; 6 is a heat exchanger for lowering the gas-vapor mixture temperature; 7 is a collecting tank with a boiler; 8 is a dewaxer; 9, 13 are the dampers; 10 is a heat exchanger for heating oil cooling; 11 is a heating oil collector; 12 is a fuel tank for the burner; 14 is a rectification column dephlegmator; 15 is a rectification column; 16 is a heat exchanger for diesel fuel cooling; 17 is a diesel fuel collector; 18 is a heat exchanger for gas cooling and gasoline and water vapors condensing; 19 is gas and water separator; 20 is a water collector; 21 is a gasoline collector; 22 is a gas collector (gasholder); 23 is a tank of circulating water; 24 is a titanium spiral strand of the left rotation direction; 25 is a titanium spiral strand of the right rotation direction; 26 is a cassette with titanium spiral strands.

## DETAILED DESCRIPTION OF THE ESSENCE OF THE INVENTION

### A. Periodic mode implementation (Fig. 1).

In the periodic mode of the device two units are involved: I is a unit of thermal destruction reactor operation in the cooling mode; II is a unit of thermal destruction reactor operation in the heating mode.

Landfill PE and PP, pre-ground and purified from polyvinylchloride, polyethylenterephtalate, cellulose, rags, rubber impurities and other wastes by flotation, are loaded into one of the thermal destruction reactors 1 (Fig. 1) through the upper hatch (not indicated on Fig. 1 - Fig. 8). At the bottom of each thermal destruction reactor 1 there is a portable (removable) furnace 2 with a fuel burner 3, which can operate on both liquid and gaseous fuels of its own production.

Then the contents of the thermal destruction reactor 1 of unit I (plastic waste in the form of PE and PP) are heated at a rate of 1.5 - 4 °C/minute. Fuel gases with a temperature of 600 - 900 °C pass through the heat pipes (not indicated on Fig. 1 - Fig. 8) of the thermal destruction reactor 1 and enter the boiler of the cube 7, and then the boiler (not indicated on Fig. 1 - Fig. 8) located in the cube of the rectification column 15.

When the temperature in the cube of the rectification column 15 reaches the values of 160 - 220 °C, the supply of fuel gases from the thermal destruction reactor 1 of unit I is stopped by means of damper 13 closing. When the temperature within 300 - 360 °C in the cube 7 is reached, the supply of fuel gases is stopped by means of damper 9 closing.

In the thermal destruction reactor 1 at a temperature of 260 - 300 °C the process of plastics destruction begins. Plastics destruction products in the form of hydrocarbons vapor-gas mixture are loaded from the thermal destruction reactor 1 into a catalyst column 5, which is a tubular apparatus with flanges, loaded with a catalyst - titanium spirals in the cassette and then into the heat exchanger 6.

When the vapors temperature reaches 300 - 360 °C, circulating water is supplied to the heat exchanger 6 for hydrocarbons vapor-gas mixture cooling. With the help of changing the water flow in the heat exchanger 6, the temperature in the cube 7 is maintained in the range of 300 - 360°C.

The hydrocarbons vapor-gas mixture enters the cube 7, where high-boiling hydrocarbons pass to the liquid phase from it. Then the vapor-gas mixture enters the dewaxer 8, which is a column apparatus, the bottom of which is loaded with a mass-exchanging cap, and a shell-and-tube heat exchanger acting as a dephlegmator is installed on the top.

Circulating water is supplied to the annular space of the heat exchanger (not indicated on Fig. 1 - Fig. 8), and hydrocarbons (paraffins) condensation is carried out in the heat exchanger tubes. Condensed paraffins return back to the cube 7. The temperature of the vapors at the outlet of the dewaxer 8 is maintained in the range of 180 - 300 °C by changing the water supply to the dephlegmator.

Then, the hydrocarbon vapors enter the rectification column 15, where they are separated into gasoline and diesel fractions. Diesel fraction enters the diesel fuel collector 17 from the bottom of the column 15 through the heat exchanger 16, cooled by circulating water. The gasoline fraction in the form of vapor and the hydrocarbon gas from the top of the distillation column 15 go to the heat exchanger 18 for gas cooling and gasoline and water vapors condensing.

The diesel fuel quality (flash point, fractional composition) is regulated by the temperature of the rectification column 15 bottom, which is 160 - 220 °C.

The gasoline fraction quality (density, fractional composition, and end of boiling) is regulated by the temperature at the outlet from the rectification column 15. The temperature of the top of the rectification column is maintained in the range of 35 - 100 °C by supplying water to the dephlegmator 14 of the rectification column 15. Dephlegmator 14 is a shell-and-tube heat exchanger, into the annular space of which the circulating water is supplied, and in the tube space of the dephlegmator 14, high-boiling hydrocarbons are condensed.

Gasoline fractions vapors and water are condensed in the heat exchanger 18, which is cooled by circulating water. Water and hydrocarbon gas are separated from the gasoline in gas and water separator 19. The hydrocarbon gas that does not condense is sent to the burner 3 to heat the thermal destruction reactor 1, and the excess hydrocarbon gas is collected in a gas collector (gasholder) 22.

Water and gasoline enter into the corresponding collectors 20 and 21. The heavy fraction (heating fuel) is collected in the cube 7 and at the end of the thermal destruction process, when hydrocarbon gas formation ceases, it is discharged to the heating fuel collector 11 through the heat exchanger 10, which is cooled by water.

The process of plastics destruction is terminated at a temperature of 450 - 480 °C. The fuel supply to the burner is disconnected and the reactor 1 is switched to the cooling mode.

Fig. 1 shows that the thermal destruction reactor 1 of unit I is switched to the cooling mode. The portable (removable) furnace 2 of unit I is disconnected from the reactor by putting it onto the wheels (not indicated on Fig. 1- Fig. 8) and its diversion for separate cooling of the thermal destruction reactor 1 of unit I. Then the portable (removable) furnace 2 (still hot) of unit I is connected to the cool (not heated) thermal destruction reactor 1 of unit II.

After cooling the reactor, the solid coke residue which remains at the bottom of the thermal destruction reactor 1 of unit I, is discharged into the coke collector 4 through the lower hatch of the thermal destruction reactor 1 of unit I.

While the process of thermal destruction proceeds in the thermal destruction reactor 1 of unit I, the thermal destruction reactor of unit 1 is loaded with plastics waste and prepared for start-up. As soon as the fuel supply to the burner 3 of unit I of the thermal destruction reactor 1 of unit I is switched off, the burner 3 of unit II of the thermal destruction reactor 1 of unit II is immediately switched on after connection of the portable hot furnace 2 of unit I and the process of destruction in the thermal destruction reactor 1 of unit I is started. Upon that the temperature in cube 7 and cube of the rectification column 15 is maintained at the same level as in the previous cycle.

After carrying out the process of thermal destruction in the thermal destruction reactor 1 of unit II, it is put into a cooling mode, and the thermal destruction reactor 1 of unit I is loaded with plastics waste, and a new cycle is carried out: "thermal destruction - cooling - dry residue unloading - plastics waste loading".

B. Continuous mode implementation (Fig. 2)

Landfill PE and PP, pre-ground (or granulated), purified from polyvinylchloride, polyethylenterephtalate, cellulose, rags, rubber and other impurities by flotation, are continuously loaded with a screw feeder (not indicated on Fig. 1 - Fig. 8) into the thermal destruction reactor 1, equipped with a furnace 2 and a fuel burner 3, which can work on both liquid and gaseous fuels of its own production.

The fuel burner 3 is switched on and the device is put into the operating temperature mode. To accelerate the predetermined mode of the device, the fuel gases generated during fuel combustion are sent to the cube 7 and rectification column 15 boiler.

Operating temperatures in the device are maintained in the following ranges: in the thermal destruction reactor 1 within 450 - 480 °C (regulated by changing the fuel supply); in the cube 7 within 300 - 360 °C (regulated by changing the water supply to the heat exchanger 6); the temperature of the output of the vapor-gas mixture from the dewaxer 8 is within 180 - 300 °C (regulated by the supply of water to the dewaxer dephlegmator 8); in the cube of rectification column 15 within 160 - 220 °C (regulated by changing the temperature of the vapor-gas mixture after the dewaxer and the top of the rectification column 15); the temperature of the output of the vapor-gas mixture from the rectification column 15 - 35 is 100 °C (regulated by the supply of water to the dephlegmator 14).

When the operating temperatures in cube 7 and in rectification column cube 15 are reached, the supply of fuel gases to the boiler (not indicated on Fig. 1 - Fig. 8) is switched off by closing dampers 9 and 13. Upon continuous operation mode, the coke is taken continuously from the reactor 1 by means of a screw. Heating fuel draining from cube 7 is carried out continuously. Upon that, the reference level of the liquid in cube 7 is maintained with the level regulator.

All other operations of the device in continuous mode are similar to the operation of the device in the periodic mode. The device is equipped with a closed circuit of circulating water and a water tank 23.

Heating fuel and diesel fraction supplied to fuel tank 12, as well as hydrocarbon gas, are used as a fuel for burners 3. Gas from gasholder 22 can be used in other power plants.

According to this method, a catalyst in the form of titanium spirals obtained by twisting titanium strands with a width of 5 - 20 mm and a thickness of 0.5 - 1.5 mm is used in the process of thermal destruction. The diameter of the spiral is 10 - 30 mm, the length is 0.1 - 1 m, and the spiral pitch is 10-40 mm. The surface of titanium spirals is pretreated with 1 - 2% hydrofluoric acid.

Titanium spirals are loaded into the catalyst column 5, the heat exchanger 6, the cube-collector 7, the dewaxer 8, and the distillation column 15.

Before being loaded into the column apparatus, the titanium spirals are collected in cassettes 26 (Fig. 5 - Fig. 8). The diameter of the cassette 26 is equal to the inner diameter of the apparatus. As can be seen from Fig. 5 - Fig. 8, the spirals are placed in a cassette parallel to each other and parallel to the side generating line of the cassette. In other words, if the cassette is placed vertically, the spirals are placed vertically as well, if the cassette is placed horizontally, the spirals are also placed horizontally.

Location of the spirals is predominantly vertical in the column apparatus. Cassette 26 is placed horizontally in the catalyst column 5. Upon that, for the screw cap, it is no matter how to place it, horizontally or vertically. Moreover, for small values of the apparatus diameters (up to 1,000 mm), it is more convenient to load the cap in a "standing position", i.e. a vertical cassette arrangement occurs.

A heterogeneous catalyst is used as a catalyst, in the form of titanium strands twisted in spirals, each spiral pre-twisting in one or in different directions, producing in the second case a spiral of left and right rotation, using strands twisted all in one or in different directions each.

Spirals are placed twisted in one direction each, or with rows interleaving with right and left rotation direction each. Passing through such a layer of spirals the vapor-gas flow is divided into a number of jets. In the second case, these jets twist either in one or in different directions in contact with spirals, intersect with each other, mix and constantly change the direction of rotation, which intensifies the process of heat and mass exchange. Upon that, both regular and irregular placements of spirals (bundles) are used in the section of the apparatus or device (in the column apparatus, cassette, tubes of heat exchangers).

Combining the spirals with the alternation of unidirectionality and multi-directionality, it is also possible to control the motion direction, speed, vapor-gas flow concentration, and the heat and mass exchange process rate in the catalyst column.

It was found that the above process is most effective when the design parameters, material and surface treatment facilities of the catalyst are reported. Beams of up to 3 or 4 spirals of a different rotation direction are loaded to the tubes of the heat exchangers (Fig. 5 - Fig. 8).

The preheating of the collecting tank 7 and the rectification column cube 15 with fuel gases, as well as the use of two or more reactors with removable (portable) furnaces, allows speeding up the process and ensuring the continuity of the hydrocarbons fractionation process. At the same time, hydrocarbons fractionation (separation) in four stages increases the clarity of separation and, consequently, the quality of the final products which comply with the current standards.

**BEST IMPLEMENTATION OF THE INVENTION**

Continuous mode of plastics waste processing is used. A catalyst in the form of titanium spirals obtained by twisting titanium strands with a width of 10 mm and a thickness of 1 mm is used for thermal destruction. The diameter of the spiral is 10 mm, the length is 0.5 m, and the spiral pitch is 20 mm. The surface of titanium spirals is pretreated with 1 % hydrofluoric acid.

Titanium spirals are loaded into the catalyst column 5, the heat exchanger 6, the cube-collector 7, the dewaxer 8, and the distillation column 15. Before loading into the column apparatus, titanium spirals are also collected in cassettes 26. The diameter of the cassette is equal to the diameter of the apparatus. In the column, the cassettes are installed vertically on top of each other to the full height of the packed column section. Beams of 4 spirals of a different rotation direction are loaded to the tubes of the heat exchangers (Fig. 5 - Fig. 8).

The volume of the collecting tank is determined from the correspondence:

$$V_n = 2 \cdot Q_n,$$

where $Q_n$ is the heating fuel capacity of the device per one hour, $m^3$/hour; $V_n$ is the volume of the collecting tank, $m^3$.

The defined values appeared to be equal: $Q_n$ is the heating fuel capacity of the device per one hour, $Q_n = 0.125$ $m^3$/hour; then $V_n = 2 \cdot Q_n = 0.25$ $m^3$.

The screw feeder is started and the pre-arranged landfill PE and PP are supplied to the thermal destruction reactor 1. The fuel burner 3 is turned on, using heating or diesel fuel of its own production as fuel. Fuel gases from the burner at a temperature of 700 oC are sent to the boiler of the cube 7 and the rectification column 15. Water is supplied to the heat exchanger 18.

Then the contents of the thermal destruction reactor 1 (plastic waste in the form of PE and PP) are heated at a rate of 3 °C/minute. When the temperature in the cube of the rectification column 15 reaches the values of 180 °C, the supply of fuel gases from the thermal destruction reactor 1 is stopped by means of damper 13 closing.

When the temperature in the cube 7 reaches 340 °C, the supply of fuel gases to the cube boiler is stopped by means of damper 9 closing. When the vapors temperature reaches 340 °C, circulating water is supplied to the heat exchanger 6 for hydrocarbons vapor-gas mixture cooling. With the help of changing the water flow in the heat exchanger 6, the temperature in the cube 7 is maintained within 340 °C.

When the temperature reaches 240 °C after the dewaxer, water is supplied to the dephlegmator. When the temperature of the top of rectification column 15 reaches 58 °C, water is supplied to the dephlegmator. When the operating temperature of 470 °C is reached in the reactor 1, the fuel burner is transferred to work on a hydrocarbon gas of its own production.

The process control mode is transferred from manual to automatic.

The diesel fuel quality (flash point, fractional composition) is regulated by the temperature of the rectification column 15 bottom, which is 180 oC.

The gasoline fraction quality (density, fractional composition, and end of boiling) is regulated by the temperature at the outlet from the rectification column 15. The temperature of the top of the rectification column is maintained in the range of 58 oC by supplying water to the dephlegmator 14 of the rectification column 15. Gasoline fractions vapors and water are condensed in the heat exchanger 18, which is cooled by circulating water.

Water and hydrocarbon gas are separated from the gasoline in gas and water separator 19. The hydrocarbon gas that does not condense is sent to the burner 3 to heat the thermal destruction reactor 1, and the excess hydrocarbon gas is collected in a gas collector (gasholder) 22.

Water and gasoline enter into the corresponding collectors 20 and 21. Diesel fuel enters the collector 17 through the heat exchanger 16, which is cooled by water. The heavy fraction (furnace fuel) from the cube 7 is discharged to the heating fuel collector 11 through the heat exchanger 10, which is cooled by water. The coke is taken from the reactor 1 continuously by means of a screw into a coke collector 4.

Specific fuel costs for the exemplary implementation of the invention are 70%, water 50%, and the yield of light products (gasoline and diesel fuel) is higher by 8% compared to the prototype.

## INDUSTRIAL APPLICABILITY

Thus, improvement of the quality and increase in the yield of finished products - gasoline and diesel fuel - is achieved by means of the use of efficient designs, operating parameters and procedures during the main stages of the invention implementation, in particular at the stage of fractionation. The preheating of the collecting tank 7 and the rectification column cube 15 with fuel gases, as well as the use of two or more reactors with removable (portable) furnaces, allows speeding up the process and ensuring the continuity of the hydrocarbons fractionation process. At the same time, hydrocarbons fractionation (separation) in four stages increases the clarity of separation and, consequently, the quality of the final products which comply with the current standards.

The invention proposed is more cost-effective than the prototype method, since the specific fuel costs for the process are 70 - 75%, and water is 50 - 60% compared to the prototype method and apparatus. Besides, in the developed technical solution the yield of light products (gasoline and diesel fuel) is 5 - 8% higher, the quality of gasoline complies with GOST R 51105-97 "Unleaded gasoline", and the diesel fuel complies with GOST 305-82 "Diesel fuel L-0.05-40".

## Claims

1. Device for thermal destruction of polyethylene and polypropylene waste, implemented in both periodic and continuous modes of the above-mentioned plastics waste processing, which includes a polymer raw material heating unit, a pyrolysis furnace and a reactor of polymeric raw material thermal destruction, with devices of raw material loading and coke unloading, a unit for fractionating the destruction products of polymer raw material, a unit of heat exchangers, equipment for performing thermal catalysis over a catalyst, as well as the supply unit with pipelines for the cooling agent in the form of water circulating, *characterized in that* the device when operated in a periodic plastic waste processing mode, contains no less than two thermal destruction reactors connected in parallel with the provision of a full technological cycle "heating - thermal destruction - cooling - coke unloading - raw material loading ", wherein each of the reactors, or one of them, is equipped with a portable or removable furnace, which is made with the possibility of detachment from the reactor, in which the thermal destruction process is finished and joining to the reactor in which the thermal destruction process begins, and the unit for fractionating the polymer raw material destruction products, namely the vapor-gas mixture, consists of a series-connected heat exchanger with water cooling in which the circuit of countercurrent motion of the phases with a descending flow of a vapor-gas mixture of hydrocarbons, a hydrocarbons collecting tank with a boiler, a dewaxer consisting of a packed bottom and a dephlegmator installed at the top and configured as a shell-and-tube heat exchanger, a rectification column for separating diesel fuel and gasoline fractions, consisting of a packed bottom and a dephlegmator installed at the top and configured as a shell-and-tube heat exchanger, and a boiler, installed in the column cube, a tubular vertically installed heat exchanger with a downward movement of gasoline vapor and hydrocarbon gas, wherein as catalyst the device includes a heterogeneous catalyst in the form of titanium strands twisted in spiral, besides, each spiral is preturned in one or in different directions, forming in the second case left and right rotation spirals, besides strands are used turned with a spiral in one direction each, or turned all with spirals in different directions each, titanium strands are placed in the collecting tank, in the tubes of the heat exchanger, where high-boiling components of a vapor-gas mixture are condensed, in the tubes of the dewaxer dephlegmator and in the tubes of the rectification column dephlegmator.

2. Device according to claim 1, ***characterized in that*** the volume of the collecting tank is selected according to the condition under which the heating fuel dwelling time in the form of hydrocarbons mixture in it was sufficient to ensure complete stripping of the light fractions.

3. Device according to claim 2, ***characterized in that*** operating in a periodic mode, the volume of the hydrocarbons collecting tank is determined from the correspondence

$$V_p = 2 \cdot Q_p,$$

where $Q_p$ is the heating fuel capacity of the device in a single operation cycle, m³/cycle, $V_p$ is the volume of the hydrocarbon collecting tank, m³.

4. Device according to claim 1, ***characterized in that*** operating in a continuous mode, the volume of the hydrocarbons collecting tank is determined from the correspondence

$$V_n = 2 \cdot Q_n,$$

where $Q_n$ is the heating fuel capacity of the device per one hour, m³/hour,
$V_n$ is the volume of the hydrocarbons collecting tank, m³.

5. Device according to claim 1, ***characterized in that*** as a catalyst, the device contains a heterogeneous catalyst made in the form of titanium strands are used with a width of 5 - 20 mm, a thickness of 0.5 - 1.5 mm, which in the twisted form have a diameter of 10 - 30 mm, a length of 0.1 - 1 m, with a spiral pitch of 10 - 40 mm.

6. Device according to claim 5, ***characterized in that*** *the* titanium spirals are preliminary treated during 0.5 - 1 hour by contacting with 1 - 2% hydrofluoric acid at a temperature of 30 - 40 °C.

7. Device according to claim 5, ***characterized in that*** *the* titanium strands twisted in spiral are used as a mass-exchanging caps in the dewaxer and in the rectification column.

8. Device according to claim 1, ***characterized in that*** the dewaxer is made in the form of a column apparatus, the bottom of which is filled with both regular and irregular mass-exchanging cap, made in the form of titanium spirals and having a free opening of 90 - 93%.

9. Device according to claim 8, ***characterized in that*** irregular mass-exchanging cap is performed in the form of titanium spirals loaded in bulk, with a spiral length of 0.1 - 0.2 m.

**10.** Device according to claim 8, ***characterized in that*** regular mass-exchanging cap is performed in the form of titanium spirals collected in cassettes, with titanium spirals length of up to 1 m.

**11.** Device according to claim 1, ***characterized in that*** *the* shell-and-tube heat exchanger is installed at the top of the dewaxer, which serves as a dephlegmator, and titanium spirals of different rotation direction are arranged in the dewaxer tubes.

Fig. 1

Fig. 2

Fig. 3     Fig. 4

A-A

Fig. 5

Fig. 6

Fig. 7

B-B

Fig. 8

## INTERNATIONAL SEARCH REPORT

| International application No. |
| --- |
| PCT/UA 2015/000090 |

**A.    CLASSIFICATION OF SUBJECT MATTER**

B29B 17/00 (2006.01); C10G 1/02 (2006.01); C10B 53/07 (2006.01)

According to International Patent Classification (IPC) or to both national classification and IPC

**B.    FIELDS SEARCHED**

Minimum documentation searched (classification system followed by classification symbols)

B29B 17/00, C10G 1/02, C10B 53/07

Documentation searched other than minimum documentation to the extent that such documents are included in the fields searched

Electronic data base consulted during the international search (name of data base and, where practicable, search terms used)

DEPATISnet, EAPATIS, Espacenet, Google, PatSearch (RUPTO internal), RUPAT, USPTO, Patentscope, ВИНИТИ (VINITI)

**C.    DOCUMENTS CONSIDERED TO BE RELEVANT**

| Category* | Citation of document, with indication, where appropriate, of the relevant passages | Relevant to claim No. |
| --- | --- | --- |
| A | UA 45455 U (IANKOVY DMITRO SERPIOVICH) 10.11.2009, col. 3, line 47 - col. 4, fig. 1-2 | 1-11 |
| A | EP 2327485 A1 (KUSATSU ELECTRIC CO., LTD.) 01.06.2011, the abstract, para. [0040] - [0046], para. 1, claim 1 | 1-11 |
| A | BY 13123 C1 (JURAN VASILY SERGEEVICH et al.) 30.04.2010, p. 2, item 3 of the claims, p. 5, lines 6, 28 | 1-11 |

☐    Further documents are listed in the continuation of Box C.          ☐    See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 January 2016 (20.01.2016) | 28 January 2016 (28.01.2016) |

| Name and mailing address of the ISA/ | Authorized officer |
| --- | --- |
| RU | |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2106365
- RU 9301136504
- WO 2010015148202 A
- WO U201210850 A
- US 005998682 A

- US 09182647 B
- WO U200612719 A
- WO U200912544 A
- WO U20090583 A

### Non-patent literature cited in the description

- **A. S. KLINKOV ; P. S. BELYAIEV ; M. V. SOKOLOV.** Utilization and recycling of polymer materials: teaching guide. Tambov: Publishing house of Tambov State Technical University, 2005, 80